Europäisches Patentamt

European Patent Office

Office européen des brevets

(11) Publication number: **0 503 671 A2**

# EUROPEAN PATENT APPLICATION

(21) Application number: **92104414.5**

(22) Date of filing: **13.03.92**

(51) Int. Cl.⁵: **G06F 7/50**

(30) Priority: **13.03.91 JP 47164/91**

(43) Date of publication of application:
**16.09.92 Bulletin 92/38**

(84) Designated Contracting States:
**DE FR GB NL**

(71) Applicant: **NEC CORPORATION**
**7-1, Shiba 5-chome Minato-ku**
**Tokyo 108-01(JP)**

(72) Inventor: **Yokota, Chiori, c/o NEC Corporation**
**7-1, Shiba 5-chome**
**Minato-ku, Tokyo(JP)**
Inventor: **Okamoto, Toshiyuki, c/o NEC**
**Corporation**
**7-1, Shiba 5-chome**
**Minato-ku, Tokyo(JP)**

(74) Representative: **Betten & Resch**
**Reichenbachstrasse 19**
**W-8000 München 5(DE)**

(54) **Full adder.**

(57) A full adder comprises an exclusive-OR circuit and an exclusive-NOR circuit which receives a first one-bit input data and a second one-bit input data for generating an exclusive-OR signal and an exclusive-NOR signal, respectively. A first switching circuit receives the exclusive-OR signal, the exclusive-NOR signal and a one-bit carry-in data for outputting, as a one-bit sum data, the one-bit carry-in data when the first and second one-bit input data are equal to each other, and a NOT signal of the one-bit carry-in data when the first and second one-bit input data are different from each other. A second switching circuit receives the exclusive-OR signal, the exclusive-NOR signal, the one-bit carry-in data and the first one-bit input data for outputting, as the one-bit carry-out data, the first one-bit input data when the first and second one-bit input data are equal to each other, and the one-bit carry-in data when the first and second one-bit input data are different from each other.

## FIGURE 1

Background of the Invention

Field of the invention

The present invention relates to a full adder, and more specifically to a full adder receiving one-bit inputs of addend, augend and carry data, and capable of generating a one-bit sum output and one-bit carry output at a high processing speed.

Description of related art

One typical conventional full adder includes a first exclusive-OR circuit receiving a first one-bit input data and a second one-bit input data, and a second exclusive-OR circuit receiving an output of the first exclusive-OR circuit and a one-bit catty-in data so as to generate a one-bit sum output. The conventional full adder also includes a first AND circuit receiving the first one-bit input data and the second one-bit input data, a second AND circuit receiving an output of the first exclusive-OR circuit and the one-bit carry-in data, and an OR circuit receiving outputs of the first and second AND circuit for generating a one-bit carry-out data.

The above mentioned full adder is well known to persons in the art, and therefore, description of operation will be omitted. However, it would be understood that the first one-bit input data and the second one-bit input data pass through two exclusive-OR circuits until the one-bit sum output is generated, and also through one exclusive-OR circuit, one AND circuit and one OR circuit until the one-bit carry-out data is generated. In the above mentioned full adder,.therefore, a signal processing is performed through a number of logic gates, since any logic circuit is composed of one or more logic gates, and accordingly, an operation speed is low. For example, one typical conventional full adder requires the operation time of 6 nanoseconds.

Summary of the Invention

Accordingly, it is an object of the present invention to provide a full adder which has overcome the above mentioned defect of the conventional one.

Another object of the present invention is to provide a full adder having an operation speed remarkably higher than the conventional one.

The above and other objects of the present invention are achieved in accordance with the present invention by a full adder receiving a first one-bit input data, a second one-bit input data and a one-bit carry-in data and generating a one-bit sum output and a one-bit carry-out data, the full adder comprising a first circuit receiving the first one-bit input data and the second one-bit input data for generating an exclusive-OR signal, a second circuit receiving the first one-bit input data and the second one-bit input data for generating an exclusive-NOR signal, a third circuit receiving the exclusive-OR signal, the exclusive-NOR signal and the one-bit carry-in data for selectively outputting, as the one-bit sum data, either the one-bit carry-in data or a NOT signal of the one-bit carry-in data in accordance with the exclusive-OR signal, and a fourth circuit receiving the exclusive-OR signal, the exclusive-NOR signal, the one-bit carry-in data and one of the first one-bit input data and the second one-bit input data for selectively outputting, as the one-bit carry-out data, either the one-bit carry-in data or the one of the first one-bit input data and the second one-bit input data in accordance with the exclusive-NOR signal.

With the above mentioned arrangement, the third and fourth circuits operates on the basis of the exclusive-OR and the exclusive-NOR between the first one-bit input data and the second one-bit input data, so as to perform their switching function to the effect that the one-bit sum data is selectively given by either the carry-in data and the NOT signal of the carry-in data, and the one-bit carry-out data is selectively given by either the one-bit carry-in data or the one of the first one-bit input data and the second one-bit input data. Therefore, the number of logic gates through which the input signals have to pass is remarkably decreased, and accordingly, the full addition operation can be performed at a high speed.

The above and other objects, features and advantages of the present invention will be apparent from the following description of preferred embodiments of the invention with reference to the accompanying drawings.

Brief Description of the Drawings

Figure 1 is a logic block diagram of a first embodiment of the full adder in accordance with the present invention;

Figure 2 is a logic circuit diagram of a second embodiment of the full adder in accordance with the present invention; and

Figure 3 is a logic circuit diagram of a third embodiment of the full adder in accordance with the present invention.

Description of the Preferred embodiments

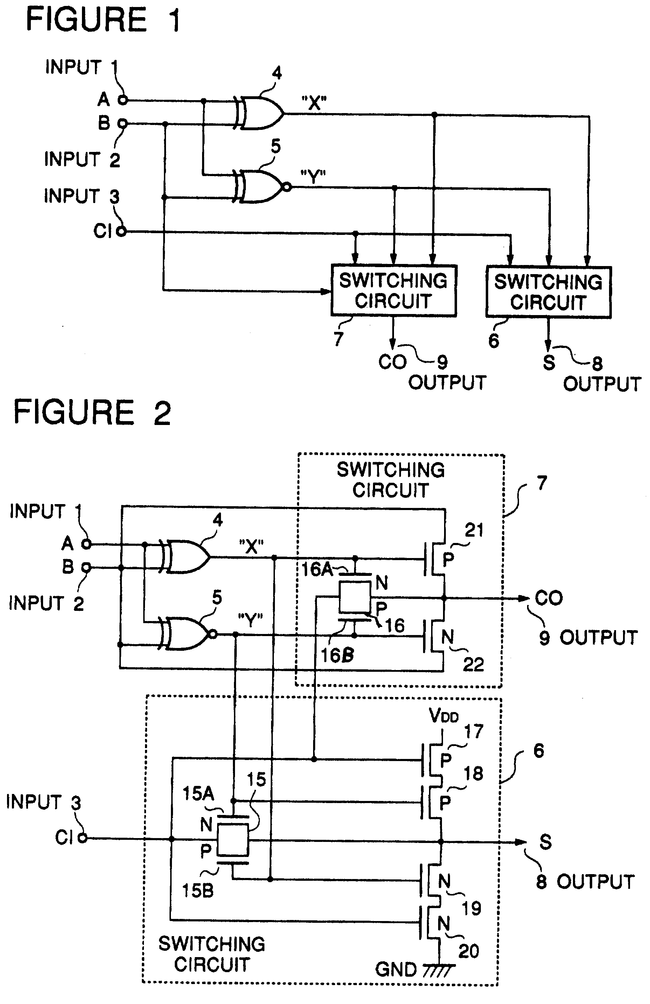

Referring to Figure 1, there is shown a logic block diagram of a first embodiment of the full adder in accordance with the present invention.

The first embodiment includes an exclusive-OR circuit 4 receiving a first one-bit input data "A" and a second one-bit input data "B" supplied through first and second input terminals 1 and 2, respectively. This exclusive-OR circuit generates an exclusive-OR signal "X". Similarly, an exclusive-NOR circuit 5 receives the first one-bit input data "A" and the second one-bit input data "B" for generating an exclusive-NOR signal "Y". The exclusive-OR signal "X" , the exclusive-NOR signal "Y" and a one-bit carry-in data "CI" supplied through a third input terminal 3 are supplied to a first switching circuit 6, which generates a one-bit sum data "S" to a first output terminal 8. In addition, the exclusive-OR signal "X", the exclusive-NOR signal "Y", the one-bit carry-in data "CI" and one of the first one-bit input data "A" and the second one-bit input data "B" (the second one-bit input data "B" in the shown embodiment) are supplied to a second switching circuit 7, which generates a one-bit carry-out data "CO" to a second output terminal 9.

For illustrating an operation of the first embodiment of the full adder, the following is a logic table showing the relation between the first one-bit input data "A", the second one-bit input data "B", the one-bit carry-in data "CI" , the exclusive-OR signal "X", the exclusive-NOR signal "Y", the one-bit sum data "S" and the one-bit carry-out data "CO".

| A | B | CI | X | Y | S | CO |
|---|---|----|---|---|---|----|
| 0 | 0 | 0 | 0 | 1 | 0 | 0 |
| 0 | 0 | 1 | 0 | 1 | 1 | 0 |
| 0 | 1 | 0 | 1 | 0 | 1 | 0 |
| 0 | 1 | 1 | 1 | 0 | 0 | 1 |
| 1 | 0 | 0 | 1 | 0 | 1 | 0 |
| 1 | 0 | 1 | 1 | 0 | 0 | 1 |
| 1 | 1 | 0 | 0 | 1 | 0 | 1 |
| 1 | 1 | 1 | 0 | 1 | 1 | 1 |

As seen from the above table, if the input data "A" and "B" are equal to each other, the output "X" of the exclusive-OR circuit 4 is "0", and the output "Y" of the exclusive-NOR circuit 5 is "1". If the exclusive-OR signal "X" and the exclusive-NOR signal "Y" are supplied to the first and second switching circuits 6 and 7, the first switching circuit 6 operates to make the one-bit sum output data "S" consistent with the carry-in data "CI", and the second switching circuit 7 operates to make the one-bit carry-out data "CO" consistent with the second input data "B".

If the input data "A" and "B" are different from each other, the output "X" of the exclusive-OR circuit 4 is "1", and the output "Y" of the exclusive-NOR circuit 5 is "0". If the exclusive-OR signal "X" and the exclusive-NOR signal "Y" are supplied to the first and second switching circuits 6 and 7, the first switching circuit 6 operates to make the one-bit sum output data "S" consistent with a NOT signal of the carry-in data "CI", and the second switching circuit 7 operates to make the one-bit carry-out data "CO" consistent with the carry-in data "CI".

Referring to Figure 2, there is shown a logic circuit diagram of a second embodiment of the full adder in accordance with the present invention for illustrating a detailed structure of the two switching circuits. In Figure 2, elements corresponding to those shown in Figure 1 are given the same Reference Numerals, and explanation thereof will be omitted.

The first switching circuit 6 includes a transfer gate 15 connected between the input terminal 3 and the output terminal 8. This transfer gate 15 is composed of an N-channel MOSFET (metal-oxide-semiconductor field effect transistor) 15A and a P-channel MOSFET 15B, which are connected in parallel to each other. The first switching circuit 6 also includes a pair of P-channel MOSFETs 17 and 18 connected in series between the output terminal 8 and a voltage supply terminal $V_{DD}$, and a pair of N-channel MOSFETs 19 and 20 connected in series between the output terminal 8 and a ground GND. The exclusive-OR signal "X" of the exclusive-OR circuit 4 is connected to a gate of the P-channel MOSFET 15B of the transfer gate 15 and a gate of the N-channel MOSFET 19. The exclusive-NOR signal "Y" of the exclusive-NOR circuit 5 is connected to a gate of the N-channel MOSFET 15A of the transfer gate 15 and a gate of the P-channel MOSFET 18. In addition, the carry-in signal "CI" is connected to gates of the P-channel MOSFET 17 and the N-channel MOSFET 20.

Thus, the transfer gate 15 is controlled by the exclusive-OR signal "X" of the exclusive-OR circuit 4 and the exclusive-NOR signal "Y" of the exclusive-NOR circuit 5, so as to control whether or not the carry-in data "CI" is outputted directly to the first output terminal 8 for the sum output data "S". When the transfer gate 15 is opened, since the P-channel MOSFET 18 and the N-channel MOSFET 19 are turned off, the carry-in data "CI" is outputted directly to the first output terminal 8 for the sum output data "S". When the transfer gate 15 is blocked, since the P-channel MOSFET 18 and the N-channel MOSFET 19 are turned on, the P-channel MOSFET 17 and the N-channel MOSFET 20, which receive the carry-in data "CI" at their gate functions, as an inverter. Therefore, when the carry-in data "CI" is not outputted directly to the first output terminal 8 for the sum output data "S", a NOT signal of the carry-in data "CI" is outputted from the first output terminal 8 for the sum output data "S".

The second switching circuit 7 includes a transfer gate 16 connected between the input terminal 3 and the output terminal 9. This transfer gate 15 is composed of an N-channel MOSFET 16A and a P-channel MOSFET 16B connected in parallel to each other. The second switching circuit 7 also includes a P-channel MOSFET 21 connected between the output terminal 9 and the input terminal 2 for the second input data "B", and an N-channel MOSFET 22 connected between the output terminal 9 and the input terminal 2 for the second input data "B". The exclusive-OR signal "X" of the exclusive-OR circuit 4 is connected to a gate of the N-channel MOSFET 16A of the transfer gate 16 and a gate of the P-channel MOSFET 21. The exclusive-NOR signal "Y" of the exclusive-NOR circuit 5 is connected to a gate of the P-channel MOSFET 16B of the transfer gate 16 and a gate of the N-channel MOSFET 22.

In this second switching circuit 7, the transfer gate 16 is controlled by the exclusive-OR signal "X" and the exclusive-NOR signal "Y", so as to control whether or not the carry-in data "CI" is outputted directly to the first output terminal 9 for the carry-out data "CO". When the transfer gate 16 is opened, the P-channel MOSFET 21 and the N-channel MOSFET 22 are turned off, and the carry-in data "CI" is outputted to the second output terminal 9 for the carry-out data "CO". On the other hand, when the transfer gate 16 is blocked, since the P-channel MOSFET 21 and the N-channel MOSFET 22 are turned on, the second input data "B" is outputted to the second output terminal 9 for the carry-out data "CO" through the turned-on P-channel MOSFET 21 or the turned-on N-channel MOSFET 22.

Thus, if the input data "A" and "B" are equal to each other, the output "X" of the exclusive-OR circuit 4 is "0", and the output "Y" of the exclusive-NOR circuit 5 is "1". If the exclusive-OR signal "X" of "0" and the exclusive-NOR signal "Y" of "1" are supplied to the first and second switching circuits 6 and 7, the transfer gate 15 of the first switching circuit 6 is opened so as output the carry-in data "CI" as the one-bit sum output data "S". On the other hand, the transfer gate 16 of the second switching circuit 7 is blocked and the P-channel MOSFET 21 and the N-channel MOSFET 22 are turned on, so that the second input data "B" is outputted as the one-bit carry-out data "CO".

If the input data "A" and "B" are different from each other, the output "X" of the exclusive-OR circuit 4 is "1", and the output "Y" of the exclusive-NOR circuit 5 is "0". If the exclusive-OR signal "X" of "1" and the exclusive-NOR signal "Y" of "0" are supplied to the first and second switching circuits 6 and 7, the transfer gate 15 of the first switching circuit 6 is blocked so that the carry-in data "CI" is inverted by the inverter formed of the MOSFETs 17 and 20, and therefore, a NOT signal of the carry-in data "CI" is outputted as the one-bit sum output data "S". On the other hand, the P-channel MOSFET 21 and the N-channel MOSFET 22 are turned off, and the transfer gate 16 of the second switching circuit 7 is opened to output the carry-in data "CI" as the one-bit carry-out data "CO".

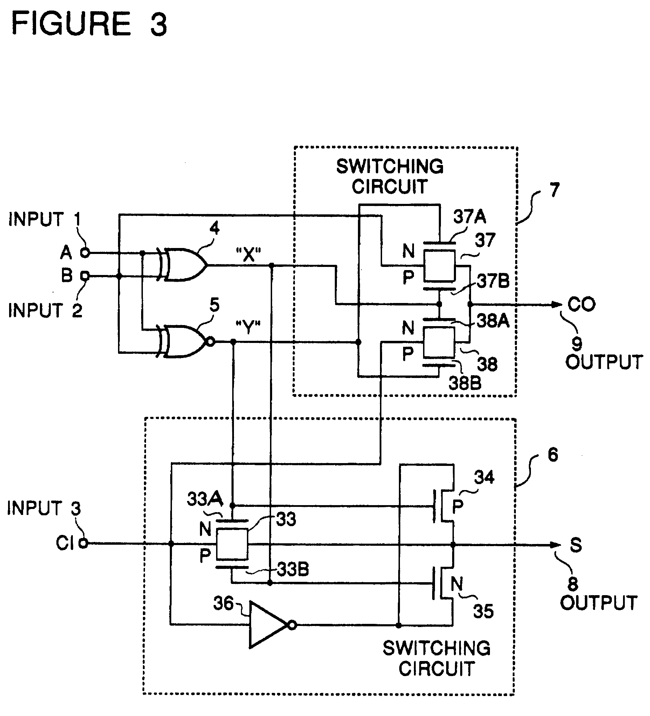

Referring to Figure 3, there is shown a logic circuit diagram of a third embodiment of the full adder in accordance with the present invention for illustrating another detailed structure of the two switching circuits. In Figure 3, elements corresponding to those shown in Figure 1 are given the same Reference Numerals, and explanation thereof will be omitted.

The first switching circuit 6 shown in Figure 3 includes a transfer gate 33 connected between the input terminal 3 and the output terminal 8. This transfer gate 33 is composed of an N-channel MOSFET 33A and a P-channel MOSFET 33B connected in parallel to each other. A P-channel MOSFET 34 is connected between the output terminal 8 and an output of the inverter 36 having an input connected to the input terminal 3 for the carry-in signal "CI". An N-channel MOSFET 35 is connected between the output terminal 8 and the output of an inverter 36. The exclusive-OR signal "X" of the exclusive-OR circuit 4 is connected to a gate of the P-channel MOSFET 33B of the transfer gate 33 and a gate of the N-channel MOSFET 35.

The exclusive-NOR signal "Y" of the exclusive-NOR circuit 5 is connected to a gate of the N-channel MOSFET 33A of the transfer gate 33 and a gate of the P-channel MOSFET 34.

Thus, the transfer gate 33 is controlled by the exclusive-OR signal "X" of the exclusive-OR circuit 4 and the exclusive-NOR signal "Y" of the exclusive-NOR circuit 5, so as to control whether or not the carry-in data "CI" is outputted directly to the first output terminal 8 for the sum output data "S". When the transfer gate 33 is opened, since the P-channel MOSFET 34 and the N-channel MOSFET 35 are turned off, the carry-in data "CI" is outputted directly to the first output terminal 8 for the sum output data "S". On the other hand, when the transfer gate 33 is blocked, the P-channel MOSFET 34 and the N-channel MOSFET 35 are turned on, and therefore, the output of the inverter 36, namely, the NOT signal of the the carry-in data "CI" is outputted to the first output terminal 8 for the sum output data "S" through the turned-on P-channel MOSFET 34 or the turned-on N-channel MOSFET 35.

The second switching circuit 7 shown in Figure 3 includes a transfer gate 37 connected between the input terminal 2 and the output terminal 9, and another transfer gate 38 connected between the input terminal 3 and the output terminal 9. Each of the transfer gates 37 and 38 is composed of an N-channel MOSFET and a P-channel MOSFET connected in parallel to each other. The exclusive-OR signal "X" of the exclusive-OR circuit 4 is connected to a gate of a P-channel MOSFET 37B of the transfer gate 37 and a gate of an N-channel MOSFET 38A of the transfer gate 38. The exclusive-NOR signal "Y" of the exclusive-NOR circuit 5 is connected to a gate of an N-channel MOSFET 37A of the transfer gate 37 and a gate of a P-channel MOSFET 38B of the transfer gate 38.

In this second switching circuit 7, the transfer gate 37 is controlled by the exclusive-OR signal "X" of the exclusive-OR circuit 4 and the exclusive-NOR signal "Y" of the exclusive-NOR circuit 5, so as to control whether or not the second input data "B" is supplied directly to the first output terminal 9 for the carry-out data "CO". The transfer gate 38 is controlled by the exclusive-OR signal "X'," of the exclusive-OR circuit 4 and the exclusive-NOR signal "Y" of the exclusive-NOR circuit 5, so as to control whether or not the carry-in data "CI" is supplied directly to the first output terminal 9. However, as seen from the above description and Figure 3, when the transfer gate 37 is opened, the transfer gate 38 is blocked, and when the transfer gate 38 is opened, the transfer gate 37 is blocked.

Thus, if the input data "A" and "B" are equal to each other, the output "X" of the exclusive-OR circuit 4 is "0", and the output "Y" of the exclusive-NOR circuit 5 is "1". If the exclusive-OR signal "X" of "0" and the exclusive-NOR signal "Y" of "1" are supplied to the first and second switching circuits 6 and 7, the transfer gate 33 of the first switching circuit 6 is opened so as output the carry-in data "CI" as the one-bit sum output data "S", and the transfer gates 37 and 38 of the second switching circuit 7 are opened and blocked, respectively, so that the input data "B" is outputted as the one-bit carry-out data "CO". At this time, the MOSFETs 34 and 35 are turned off.

If the input data "A" and "B" are different from each other, the output "X" of the exclusive-OR circuit 4 is "1", and the output "Y" of the exclusive-NOR circuit 5 is "0". If the exclusive-OR signal "X" of "1" and the exclusive-NOR signal "Y" of "0" are supplied to the first and second switching circuits 6 and 7, the transfer gate 33 of the first switching circuit 6 is blocked, and the MOSFETs 34 and 35 are turned on, so that the output of the inverter 36, namely, the NOT signal of the carry-in data "CI" is outputted to the output terminal 8 as the one-bit sum output data "S". On the other hand, the transfer gates 37 and 38 of the second switching circuit 7 are blocked and opened, respectively, so that the carry-in data "CI" is outputted as the one-bit carry-out data "CO".

As will be apparent from the above description with reference to the drawings, the two switching circuits operate on the basis of the exclusive-OR and the exclusive-NOR between the first one-bit input data and the second one-bit input data, so as to perform their switching function to the effect that the one-bit sum data is selectively given by either the carry-in data and the NOT signal of the carry-in data, and the carry-out data is selectively given by either the carry-in data or the one of the first input data and the second input data. Therefore, the number of logic gates through which the input signals have to pass is remarkably decreased, and accordingly, the full addition operation can be performed at a high speed, for example with 2.2 nanoseconds in one preferred embodiment.

The invention has thus been shown and described with reference to the specific embodiments. However, it should be noted that the present invention is in no way limited to the details of the illustrated structures but changes and modifications may be made.

## Claims

1. A full adder receiving a first one-bit input data, a second one-bit input data and a one-bit carry-in data and generating a one-bit sum output and a one-bit carry-out data, the full adder comprising a first circuit receiving said first one-bit input data and said second one-bit input data for generating an exclusive-OR signal, a second circuit receiving said first one-bit input data and said second one-bit input data for generating an exclusive-NOR signal, a third circuit receiving said exclusive-OR signal, said exclusive-NOR signal and said one-bit carry-in data for selectively outputting, as said one-bit sum data, either said one-bit carry-in data or a NOT signal of said one-bit carry-in data in accordance with said exclusive-OR signal, and a fourth circuit receiving said exclusive-OR signal, said exclusive-NOR signal, said one-bit carry-in data and one of said first one-bit input data and said second one-bit input data for selectively outputting, as said one-bit carry-out data, either said one-bit carry-in data or said one of said first one-bit input data and said second one-bit input data in accordance with said exclusive-NOR signal.

2. A full adder claimed in Claim 1 wherein if said first one-bit input data and said second one-bit input data are equal to each other, said third circuit operates to output said carry-in data as said one-bit sum output data, and said fourth circuit outputs as said one-bit carry-out data said one of said first one-bit input data and said second one-bit input data, and wherein if said first one-bit input data and said second one-bit input data are different from each other, said third circuit operates to output said NOT signal of said carry-in data as said one-bit sum output data, and said fourth circuit operates to output said carry-in data as said one-bit carry-out data.

3. A full adder claimed in Claim 1 wherein said third circuit is composed of a first switching circuit which includes:

a first transfer gate connected between an input terminal for said one-bit carry-in data and a first output terminal for said one-bit sum data, a gate of a P-channel MOSFET of said first transfer gate being connected to receive said exclusive-OR signal, and a gate of an N-channel MOSFET of said first transfer gate being connected to receive said exclusive-NOR signal, and

a pair of P-channel MOSFETs connected in series between said first output terminal and a high voltage supply terminal, and a pair of N-channel MOSFETs connected in series between said first output terminal and a ground, said exclusive-OR signal being connected to a gate of one of said pair of N-channel MOSFETs, said exclusive-NOR signal being connected to a gate of one of said pair of P-channel MOSFETs, said one-bit carry-in signal being connected to a gate of the other of said pair of N-channel MOSFETs and a gate of the other of said pair of P-channel MOSFETs.

4. A full adder claimed in Claim 1 or 3 wherein said fourth circuit is composed of a second switching circuit which includes:

a second transfer gate connected between said input terminal for said one-bit carry-in data and a second output terminal for said one-bit carry-out data, a gate of an N-channel MOSFET of said second transfer gate being connected to receive said exclusive-OR signal, and a gate of a P-channel MOSFET of said second transfer gate being connected to receive said exclusive-NOR signal, and

a third P-channel MOSFET and a third N-channel MOSFET connected in parallel between said second output terminal and an input terminal for said second one-bit input data, a gate of said third P-channel MOSFET being connected to receive said exclusive-OR signal, and a gate of said third N-channel MOSFET being connected to receive said exclusive-NOR signal.

5. A full adder claimed in Claim 1 wherein said third circuit is composed of a first switching circuit which includes:

a first transfer gate connected between an input terminal for said one-bit carry-in data and a first output terminal for said one-bit sum data, a gate of a P-channel MOSFET of said first transfer gate being connected to receive said exclusive-OR signal, and a gate of an N-channel MOSFET of said first transfer gate being connected to receive said exclusive-NOR signal,

an inverter having an input connected to said input terminal for said one-bit carry-in data, and

a P-channel MOSFET and a N-channel MOSFET connected in parallel between said first output terminal and an output of said inverter, a gate of said P-channel MOSFET being connected to receive said exclusive-NOR signal, and a gate of said N-channel MOSFET being connected to receive said exclusive-OR signal.

6. A full adder claimed in Claim 1 or 5 wherein said fourth circuit is composed of a second switching circuit which includes:

a second transfer gate connected between said input terminal for said one-bit carry-in data and a second output terminal for said one-bit catty-out data, a gate of an N-channel MOSFET of said second transfer gate being connected to receive said exclusive-OR signal, and a gate of a P-channel MOSFET of said second transfer gate being connected to receive said exclusive-NOR signal, and

a third transfer gate connected between said input terminal for said first one-bit input data and said output terminal for said one-bit carry-out data, a gate of a P-channel MOSFET of said third transfer gate being connected to receive said exclusive-OR signal, and a gate of an N-channel MOSFET of said third transfer gate being connected to receive said exclusive-NOR signal.

7. A full adder receiving a first one-bit input data, a second one-bit input data and a one-bit carry-in data and generating a one-bit sum output and a one-bit carry-out data, the full adder comprising a logic circuit receiving said first one-bit input data and said second one-bit input data for generating an exclusive-OR signal, a first switching circuit receiving said exclusive-OR signal and said one-bit carry-in data for outputting, as said one-bit sum data, said one-bit carry-in data when said first and second one-bit input data are equal to each other, and a NOT signal of said one-bit carry-in data when said first and second one-bit input data are different from each other, and a second switching circuit receiving said exclusive-OR signal, said one-bit carry-in data and said first one-bit input data for outputting, as said one-bit carry-out data, said first one-bit input data when said first and second one-bit input data are equal to each other, and said one-bit carry-in data when said first and second one-bit input data are different from each other.

# FIGURE 1

# FIGURE 2

# FIGURE 3